# EUROPEAN PATENT SPECIFICATION

(11) **EP 4 688 567 B1**
(45) Date of publication and mention of the grant of the patent: **03.06.2026**
(21) Application number: 24714191.4
(22) Date of filing: 26.03.2024
(51) Int. Cl.: B64D 39/02

(54) **REDUNDANT CONTROL SYSTEM FOR AN AIR TO AIR REFUELLING SYSTEM**
REDUNDANTES STEUERUNGSSYSTEM FÜR EIN LUFT-ZU-LUFT-BETANKUNGSSYSTEM
SYSTÈME DE COMMANDE REDONDANT POUR UN SYSTÈME DE RAVITAILLEMENT EN CARBURANT AIR-AIR

(30) Priority: 29.03.2023 EP 23382296
(43) Date of publication of application: 11.02.2026
(73) Proprietor: Airbus Defence and Space, S.A.U., 28022 Madrid (ES)
(72) Inventor: JIMÉNEZ OLAZÁBAL, Andrés, 28224 Pozuelo de Alarcón, Madrid (ES)
(74) Representative: ABG Intellectual Property Law, S.L.
(86) International application number: PCT/EP2024/058080
(87) International publication number: WO 2024/200422

(56) References cited:
- EP-A1- 3 381 810
- US-A- 5 141 178

## Description

### FIELD OF THE INVENTION

The present invention belongs to the technical field of air to air refuelling for aircraft, in particular to the field of systems for controlling the hose tension during contact operation in a hose and drogue refuelling system. More particular, the invention provides a redundant control system for keeping hose in tension during contact operation in a hose and drogue refuelling system and a method for keeping the hose in tension during contact operation in the hose and drogue refuelling system.

### PRIOR ART

Document US5141178A discloses an aerial refueling system includes a reel mounted for rotation about a central axis for winding and unwinding a hose. A sheave is provided to receive the hose as it leaves the reel and to change the direction of the hose so that it trails axially of the reel. The sheave is mounted on a non-rotating carriage which is supported by the reel and moves axially along the reel as the reel rotates. Document EP3381810A1 discloses an indication system including a plurality of light sources communicatively coupled with a control system.

The indication system can be used with a refueling system, including a hose for supplying fuel to a receiver aircraft. Each light source is configured to simultaneously emit visible light and infrared light, and is operable at a dim setting and a bright setting. The control system receives refueling data from the refueling system. The refueling data includes position data indicating a position of the receiver aircraft relative to the refueling system. The control system is configured to, when the refueling data indicates that the position of the receiver aircraft is in a refueling range, activate at least one refueling light source of a plurality of refueling light sources at the bright setting and activate a remainder of the refueling light sources at the dim setting.

Current air to air refuelling is a well-known manoeuvres in the field of aircraft where a tanker aircraft operates to provide in-flight fuel to a second aircraft called receiver aircraft. One of the most used operating system nowadays is based on a hose and drogue system that includes a hose drum unit for winding and unwinding the hose during the refuelling operation. A coupling and a drogue are installed at the end of the hose. The coupling has the function of connecting with a receiver aircraft probe. The drogue has the function of generating the aerodynamic drag necessary to trail and stabilize the hose and to hold the coupling allowing that the receiver pushes forward on the coupling to connect with the tanker aircraft.

During this contact operation and while both tanker aircraft and receiver aircraft are in contact, the behaviour of the hose depends on the torque applied by the hose drum unit. An excessive torque can lead to a false contact by not allowing the receiver to connect to the coupling and this could cause a drogue sail-away. By contrast, a reduced torque can lead to a hose whipping or a whipping effect over the receiver aircraft or the tanker aircraft. This phenomenon called whipping or whipping effect is the result of the impact of the probe from the receiver approach with the drogue from the tanker hose. The whipping of the hose has a wave form which is clearly visible from the outside while the air to air refuelling operation is carried out since this wave is transmitted through the hose between the tanker aircraft and the receiver aircraft.

During the whipping phenomenon, the hose retracts into the tanker aircraft resulting in the above-mentioned wave form. This phenomenon is due to the velocity of the receiver aircraft when entering in contact with the drogue. Depending on the speed of the receiver, the resulting whipping phenomenon is proportionally more or less intense when contact is performed.

This whipping effect can have the disadvantage of causing damages at the receiver aircraft so that the wave produced by the whipping effect goes back and forth between both ends of the hose and can break the probe due to the initial speed of the receiver. For that reason, it is fundamental to control the tension in the hose during contact operation.

The hose, when deployed from the tanker aircraft, is operated by hose drum unit which is responsible for deploying and retracting the hose during the whole air to air refuelling operation. When the end of the hose contact with the probe of the receiver aircraft, said hose drum unit, located at the other end of the hose, receives a load from the whipping phenomenon and proportional to the speed of the receiver entering in contact with the hose.

Therefore, a control system to ensure the correct application of torque by the hose drum unit in the event of any fault for keeping the hose under tension during contact operation in the hose and drogue system between a tanker aircraft and a receiver aircraft is desired.

### SUMMARY OF THE INVENTION

The present invention solves the aforementioned problems by means of a redundant control system according to claim 1, a tanker aircraft according to claim 11 and a method according to claim 12. In dependent claims, preferred embodiments of the invention are defined.

The invention provides in a first inventive aspect *a redundant control system for keeping hose in tension during contact operation in a hose and drogue refuelling system.*

In an air to air refuelling operation carried out through a hose and drogue system between a tanker aircraft and a receiver aircraft, there is a stage where the drogue, arranged at the end of the hose coming from the tanker aircraft, is coupled to the probe of a receiver aircraft and remains coupled to it during refuelling, i.e. contact operation. The present system is provided as a redundant control system which means that the system is over dimensioned, as will be explained below, not only to control the hose tension during the contact operation but also in case of failure the system is configured to be able to continue to perform its function of keeping the hose in tension during contact operation in the refuelling process.

Keeping the hose in tension will be understood as the hose is under tension i.e. without whipping effect.

*The redundant control system comprises:*
*two motors configured independently to actuate a hose drum unit for keeping the hose in tension during contact operation when one of them is actuated;*
The present system comprises two motors to independently attend the performance of the hose drum unit located at the tanker aircraft and in charge of winding and unwinding, or deploying and retracting, the hose during the refuelling operation. These two motors are electrical motors and work independently, but both perform the same function during contact operation, which is to actuate the hose drum unit to apply a hose torque and keep the hose in tension. The application of the torque to the hose in the hose drum unit means that the hose is retracted or partially winded in the hose drum unit, for keeping the hose in tension and preventing the whipping effect. Only a single motor will be required to actuate the hose drum unit. Therefore, the present system is redundant as the provision of two motors that can perform the same function.

The advantage of having two motors is that it ensures that during contact operation the whipping is not transmitted between tanker aircraft and receiver aircraft in case of failure of one motor since there is always another one to perform the same function. The hose drum unit is configured to be actuated by any one of the two motors.
*two control units, each control unit comprising two computing devices and being configured to control the actuation of any one of the motors;*
The actuation of each motor is controlled by any one of the two control units so that one control unit assists one motor and the other control unit assists the remaining motor. The system can be configured so that each control unit can control any motor so that one control unit is initially configured to assist one motor and the other control unit to assist the other motor, but if necessary, this may vary from the initial configuration.
*actuating means configured to actuate one motor based at least on the operation of the computing devices and*/*or on the status of the motors;*
The redundant control system is configured to actuate one motor by actuating means taking into account information related to how the computing devices of the control unit are operating and/or the status of the motor. The information concerning the computing devices and the motors include data on whether each is performing as expected or if there are any faults. These actuating means are understood as third party controller and are responsible for driving one or the other motor, thus actuating the hose drum unit for keeping the hose in tension during contact operation in the refuelling process.
*a communication network connecting the computing devices to each other and the computing devices to the actuating means;*
The present system is also provided with a communication network with a plurality of connections that connect the computing devices to each other and also connect each computing device to the actuating means. This communication network allows the sending of information about the operation of each computing device so that each computing device knows at all times the operational status of each other computing device and this information is also provided to the actuating means for them to take this into account in order to determine which motor must be actuated.
*wherein*
*for each control unit one computing device is configured as a control computing device for controlling the actuation of one motor, and the other computing device is configured as a monitor computing device for monitoring the motor actuation control performed by the control computing device;*
The redundant control system provides the versatility that there are two computing devices in each control unit, wherein each computing device can be configured as a controller or a monitor as needed. For the actuation of one motor being controlled by one control unit, this control unit must be configured with a control computing device and a monitor computing device.

The control computing device controls the actuation of the motor what is understood as this control computing device sends a signal to the actuating means that a particular motor can be actuated and that it must remain actuated for as long as necessary in the refuelling process during contact operation.

In addition, there is a monitor computing device in charge of monitoring how the control computing device operates controlling the actuation of one motor. Like the control computing device, the monitor computing device also remains at all times monitoring the motor actuation control that the control computing device performs.

The control computing device is able to generate the control commands to the external motor power electronics from commands and system sensors. In addition, the monitor computing device is also able to generate the control commands to the external motor power electronics from commands and system sensor in an independent hardware. The monitor computing device compares continuously its computation results against the control computing device results in order to validate the operations performed by control computing device. Thus, if the monitor computing device detects that its results are equal to those of the control computing device, then the monitor computing device allows the control computing device to continue controlling the motor. However, if the result is different outside predefined tolerances, then the monitor computing device blocks or stops the control computing device from controlling the motor.

On the other hand, the system sensors are related to sensors configured to measure motor phase current, motor speed and hose position. These data is used in a dual control of current (torque) and motor speed based on PID controllers (proportional-integral-derivative controllers).

The configuration of each computing device is based on an agreement on the status of all of the computing devices. This agreement depends on status of computing devices such as operating, discrepancy or non-operating, and on failures detected from each computing device such as a global analysis of the number and type of failures is performed in order to configure each control unit as needed. This information is shared by the communication network.
*and for a contact operation, the redundant control system is configured to actuate one motor being controlled by one control unit; and in the event of at least one failure in the redundant control system, the redundant control system is reconfigured to actuate a fault-free motor being controlled by a fault-free control unit or a combination of control units.*

In a refuelling process, when the contact operation is carried out the redundant control system actuates one of the motors and manages that this motor being controlled by one of the two control units or a combination of both control units. This means that the managing of the motor to be actuates involves controlling the actuation of the motor by a control computer device and monitoring the motor actuation control by a monitor computing device, where both control and monitor computing devices are comprised in the same control unit or each one is comprised in different control units. In other words, the combination of two control units is understood as the combination of computing devices of different control units. That is, a computing device of one control unit is configured as a control computing device for controlling the actuation of a specific motor and a computing device of the other control unit is configured as a monitor computing device for monitoring the motor actuation control.

Initially the present system is programmed or in an initially predefined configuration so that each motor is assisted by a control unit, and one of the motors is selected to operate the hose drum unit for keeping the hose in tension. However, in the event of at least one failure, both at the start of the present system's operation and during the control operation, the redundant control system determines that it must be reconfigured to actuate a fault-free motor for keeping the hose in tension and to control this fault-free motor by a fault-free control unit or a combination of the two control units. In other words, the redundant control system is reconfigured under at least one failure actuating a fault-free motor and controlling this fault-free motor by two computing devices (one control computing device and one monitor computing device), each computing device from the same control unit or from a different control unit (combining control units for the reconfiguration of the redundant control system).

Advantageously, the present system has the ability to be configured as required or needed, i.e. in the event of a failure in the control system, this control system is reconfigured to actuate a fault-free motor in a control way. Even in the event of a control system failure, the present system is capable of actuating a motor so that this motor drive the hose drum unit for applying a torque on the hose and thus keep the hose in tension during the contact operation in the refuelling system in any case. This keeps the hose in tension and the whipping effect is absorbed by the torque application by the hose drum unit and damages due to the whipping are prevented.

Therefore, the present invention provides a redundant control system based on two motors and computing devices working together as a unique entity that takes decisions together depending on the status of the system.

The control system is based on at least three electronics boards which are at least two identical electronics boards and one backplane board. Each electronic board corresponds to a control unit including two computing devices and the actuating means that is designed as hardware simple in order to avoid extra hardware or software certification activities. The backplane board is also based on the actuating means (or third party controller) that is designed as hardware simple as indicated above.

Furthermore, the architecture that the present control system has provides the advantage of reduction in lead times for controller developing and also the reduction in cost since for each control unit the same software or firmware is used. The possibility to reuse the same software or firmware is possible after a safety analysis of main contributors to failure events. The logic included in the third party developed in a pure hardware simple solutions allows to reduce the criticism of failure related to the software or firmware. In this way, the same hardware electronics is used in computing devices and therefore same software or firmware is also used. The main conclusion is that only one software or firmware is developed mixed with a pure hardware simple development. Consequently, there is no need to develop and certify two different software or firmware for the present system.

In a particular embodiment,
*the at least one failure in the redundant control system is a computing device failure, or a communication failure in the communication network, or a motor failure, or actuating means failure; and*
*wherein a communication failure in the communication network corresponds to a failure in the computing device from which the failed communication is coming from.*

In the event of a failure in the present control system, this failure may have been caused either in a computing device, in the communication between computing devices or in the motor. In any case, the control system is able to reconfigure itself to do its job.

The computing device failure will be understood as a failure in any of the computing devices, as well as a motor failure will be understood as a failure in any of the two motors present in the control system. In addition, a communication failure in the communication network will be understood as a failure of the computing device from which the communication comes from regardless of whether the failure originated in the communication itself or in the computing device from which the communication is provided.

In the event of the loss of a unique communication or an entire computing device, the two nearest surviving (fault-free) computing devices re-send the information to the other computing devices. In this way, the complete information can still be shared to all surviving computing devices of the control system.

In a particular embodiment,
*the at least one failure, in a computing device, communication network or motor, is determined by the actuating means based on the data received from the control units regarding the operation of the computing devices and on the status of the motors; and*/*or*
the at least one failure in actuating means is determined by the control units based on data received from the actuating means regarding the operation of a motor.

The fault detection in the present control system is based on the determination of some irregularity in the data information reaching the actuating means of the computing devices from the control units and of the motors. For example, once the control system has been programmed to operate a particular motor being controlled by its corresponding control unit, the actuating means are configured to detect a repetitive code pattern through a simple communication from the computing devices of said control unit to validate the status of both computing devices. If the actuating means validates repetitive code patterns each both computing devices, the control system allows the actuation of the motor associated to the control unit validated. However, if the actuating detects a fault in the repetitive code pattern from the computing devices, the control system cancels the operation of the selected motor and the control system is reconfigured to be able to actuate one of the motors. That is, if the computing operation of the monitor computing devices differs from the operation calculated by the control computing device, the actuating means detect this and then the operation is not allow and the motor is stop. Therefore, if a mismatch is detected by the actuating means, motor control is not allowed by the actuating means.

Specifically, the actuating means are configured to detect any possible single failure of signals or computing electronics that are understood as failure in the computing device from which the information is coming from or from which no information is coming from.

On the other hand, the fault detection in the present control system may be also based on the determination of some irregularity in the data information reaching the control units from the actuating means. That is, the operation of the actuating means is monitored from both control units in order to know the correct operation of the actuation means. In case of failure of actuation means, the computing device ca be also reconfigured. Thus, the decision of the actuating means whether to validate the operation of one motor or the other is monitored by the computing devices of the control units to check if the actuating means is doing what is expected or if there is any failure in the actuating means.

In an embodiment, the at least one failure in the actuating means is determined by the control unit or a pair of computing devices conforming a control unit, based on the data received by the control unit from the actuating means regarding the operation of a motor. More particularly, in the event of at least one failure in the actuating means, the redundant control system is configured to reconfigure the actuating means and/or the motor to be operated. That is, in case of a failure of the actuating means detected by one pair of computing devices or a control unit, the operation of the motor associated to that actuating means and shared resources of system is stopped and this failure is communicated to the other pair of computing devices or the other control unit in order to take the complete control of system. So that the control system is reconfigured to operate the remaining motor, i.e. the one that was not associated with the actuating means that has a failure, being operated by the actuating means fault-free, and the control units are reconfigured accordingly. Alternatively, the control system is reconfigured to still operate the same motor but now operated with the remaining actuating means fault-free.

In a particular embodiment, *the actuating means is an interlock system configured to detect a repetitive code pattern coming from the computing devices through the communication network to validate the status of the computing devices for each control unit, so that*
∘ *if the interlock system validates repetitive code patterns from each computing device* of a *control unit, the interlock system allows the actuation of the corresponding motor; or*
∘ *if the interlock system detects at least one failure in the repetitive code pattern, the interlock system cancels the actuation of the motor controlled by the control unit from which the failure originates.*

The validity of interlock system requires a specific code pattern through a simple communication from each computing device and a refreshing operation performed periodically. This refreshing time is designed to work in real time operation according to motor operation.

The interlock system is configured to detect different repetitive code pattern through a simple communication to validate the status of both computing devices.

In a particular embodiment, *the status of the motors is provided to the actuating means by monitoring means configured to monitor the motors.*

This monitoring means are in charge of monitoring the operation of the motor and send information about this to the actuating means. The actuating means validates the information (related to the status of the motor) coming from the motor programmed to be operated and in case that the actuating means detects a variation in the motor information that is indicative of a failure in the motor's operation, the actuating means stops the motor's actuation and thus the control system is reconfigured.

In a particular embodiment, *in the event of at least one failure in the redundant control system, the redundant control system is configured to*
*reconfigure the computing devices as control computing devices or monitor computing devices depending on the motor to be actuated; the control of the motor to be actuated being carried out by a fault-free control unit or a combination of control units with fault-free computing devices.*

If one computing device from the control unit, corresponding to the motor that is operated, fails, the control system reconfigured the computing devices from the other control unit in order to continue assisting the operation of the motor. So that, one computing device from this other control unit is reconfigured as a control computing device for controlling the actuation of the motor and the other computing device from this same other control unit is reconfigured as a monitor computing device for monitoring the motor actuation control. That is, the control unit that is initially programmed to assist the other motor is reconfigured to assist the motor being operated due to the failure of one of the computing devices of the control unit initially programmed to assist this motor. Therefore, the actuation of the motor is now managed by the fault-free control unit.

According to a combination of control units, if one computing device from the control unit, corresponding to the motor that is operated, fails, in order to continue operating the same motor, the control system is reconfigured. In such a way that one of the computing devices from the other control unit is reconfigured to collaborate with the fault-free computing device remaining in the control unit initially corresponding to the operated motor. So that this computing device which is reconfigured in the other control unit would perform the same function as the failed one in the control unit, thus supporting the actuation of the motor previously selected to be operated. Therefore, the actuation of the motor is then assisted by a combination of a control computing device from one control unit and a monitor computing device from the other control unit. Along the entire document, the expression "combination of control units" will be understood as the combination of computing devices of different control units, one computing device being a control computing device and the other being a monitor computing device.

Advantageously, the present control system allows for versatility in the reconfiguration of the control system itself, and particularly, in the reconfiguration of the computing devices from the control unit as necessary in order to be able in any case to keep hose in tension during contact operation in the hose and drogue refuelling system.

In another embodiment, *in the event of a failure of two computing devices or two communications in the communication network or a combination of both, each failure from a different control unit, the redundant control system is reconfigured to actuate any one of the motors being controlled by a combination of both control units.*

At the moment a failure occurs in each control unit, either in computing devices or in communication network between computing devices or a combination of a failure in a computing device and a failure in communication network, the control system is reconfigured. To be able to continue to operate the motor that had originally been programmed to be actuated or even to operate the other motor, if desired, a combination of computing devices from both control units must be necessary.

In a more particular embodiment, the control of motor actuation by combining both control units comprises combining one computing device of one control unit with one computing device of the other control unit, so that one computing device is configured as a control computing device and the other computing device as a monitor computing device.

The combination of two control units involves the configuration of a computing device from one control unit as a control computing device and a computing device from the other control unit as a monitor computing device, as needed. So that both computing devices, each one from each control unit, assist the operation of the pre-set motor to be operated. It will be only necessary to reconfigure one computing device from one control unit and keep the other computing device from the other control unit in its initial configuration. This happens for the fault-free computing device of the control unit that has initially been configured as corresponding to the motor being operated.

In a more particular embodiment, if the interlock system detects a failure in the repetitive code pattern from a computing device of each control unit, the interlock system allows the actuation of any one of the motors being controlled by a combination of both control units.

In another embodiment, *in the event of a failure of two computing devices or two communications of the communication network or a combination of both, both failure from the same control unit, the redundant control system is reconfigured to actuate any one of the motors which being controlled by fault-free the control unit.*

At the moment two failures occur in the same control unit, either in computing devices or in communication network between computing devices or a combination of a failure in a computing device and a failure in communication network, the control system is reconfigured. To be able to continue operating the motor that had originally been programmed to be actuated or even to operate the other motor, if desired, a combination of computing devices from the fault-free control unit must be necessary. If the fault-free control unit corresponds to the other motor which is not now operated, the computing devices of this control unit are reconfigured to assist the motor that it is operated. As an alternative, if the failures are provided in the control unit that corresponds to the operated motor, the control system is reconfigured to actuate the other motor being controlled by the fault-free control unit without the need to reconfigure the computing devices from this fault-free control unit.

The agreement between the alive computing devices allows also to change the control and monitor configuration of the alive computing devices to keep the possibility to continue the operation of one motor with only two computing devices whatever the alive computing devices are.

In another embodiment, *in the event of a failure of one computing device or a communication of the communication network and* a *failure of one motor, the redundant control system is reconfigured to actuate the fault-free motor controlled by the fault-free control unit or a combination of both control units.*

As soon as the actuating means detect a fault in the motor being operated, the control system reconfigures itself to operate the other motor, the fault-free motor. In this case, as a fault has also been detected from one of the control units, the actuation of the fault-free motor is to be performed by its corresponding control unit in case it is fault-free or by the combination of the two control units combining a control computing device from one control unit and a monitor computing device from the other control unit, both computing devices fault-free and being reconfigured as necessary to assist the fault-free motor.

Thanks to the actuation means and the communication network, all single failures and all double failures can be overcame and allows the operation of at least one motor with two computing devices configured in control-monitor, one as a control computing device and the other as a monitor computing device, to allow a safe and monitored operation of the present control system.

Advantageously, the present control system is also adapted for being reconfigured as needed in case of two failures being detected. Therefore, even if two failures were to be detected, which is less likely, the control system is able to reconfigure itself to continue keeping hose in tension during contact operation in the hose and drogue refuelling system.

In a particular embodiment, *the communication network between the computing devices is a ring of bidirectional links.*

These bidirectional links between computing devices typically uses peer to peer communications, such as InterCON (communication between control computing devices), InterMon (communication between monitor computing devices), CrossChannel (redundancy communication between computing devices) and InterFPGA (communication between computing devices of the same control unit).

Advantageously and according to a normal use, traffic is shared between computing devices, in the direction of the shortest path to its destination. This configuration communication architecture is based on a ring loop with redundancies in order to allow the communication between different computing devices in case of failures.

In a second inventive aspect, the present invention provides *a tanker aircraft comprising a redundant control system according to the first inventive aspect.*

In a third inventive aspect, the present invention provides *a method for keeping hose tension during contact operation in a hose and drogue refuelling system by the redundant control system according to the first inventive aspect, the method comprising:*
*(a) actuating one motor to actuate a hose drum unit for keeping hose tension during contact operation, the actuated motor being controlled by one control unit, and*
*(b) in the event* of *at least one failure in the redundant control system, reconfiguring the redundant control system to actuate a fault-free motor (M1, M2) being controlled by a fault-free control unit or a combination of control units.*

The control system is firstly programmed with a first control unit corresponding to a first motor and a second control unit corresponding to a second motor. For actuating one motor, for example the first motor, the first control unit will be in charge of controlling the actuation of this first motor. In case of a failure is detected in the redundant control system, this control system is reconfigured as necessary actuating a fault-free motor and controlling the actuation of this fault-free motor selected by one control unit free of failure or by a combination of both control units.

In a particular embodiment, *in the event* of a *failure of two computing devices or two communications in the communication network or a combination of both, each from a different control unit, step (b) comprises reconfiguring the redundant control system to actuate any one of the motors being controlled by a combination of both control units.*

At the moment that two failures are detected, each failure from a different control unit, either a failure in two computing devices or a failure in two communications in the communication network or a combination of a failure in a computing device and a failure in a communication network, the control system is reconfigured to assist the actuated motor by a combination of computing devices from both control units.

In a particular embodiment, in the event of a failure of two computing or two communications in the communication network or a combination of both, each from the same control unit, step (b) comprises reconfiguring the redundant control system to actuate any one of the motors being controlled by the fault-free control unit.

In this case where two failures are detected, both failures from the same control unit, either a failure in two computing devices or a failure in two communications in the communication network or a combination of a failure in a computing device and a failure in a communication network, the control system is reconfigured to assist the actuated motor by the control unit that is free of fault.

In another particular embodiment, *in the event of a failure of one computing device or a communication in the communication network and a failure of one motor, step (b) comprises reconfiguring the redundant control system to actuate a fault-free motor being controlled by a fault-free control unit or a combination of both control units.*

By last, where two one failure is detected from one control unit and another failure is detected from one motor, the control system is reconfigured to assist the fault-free motor (the one that was not being actuated) by the control unit that is free of fault.

### DESCRIPTION OF THE DRAWINGS

- Figure 1: This figure shows a schematic architecture of the redundant control system according to the present invention.
- Figure 2: This figure shows a schematic architecture of the redundant control system in the event of a failure according to a first embodiment of the present invention.
- Figure 3: This figure shows a schematic architecture of the redundant control system in the event of a failure according to a second embodiment of the present invention.
- Figure 4: This figure shows a schematic architecture of the redundant control system in the event of failures according to a third embodiment of the present invention.
- Figure 5: This figure shows a schematic architecture of the redundant control system in the event of failures according to a fourth embodiment of the present invention.
- Figure 6: This figure shows a schematic architecture of the redundant control system in the event of failures according to a fifth embodiment of the present invention.
- Figure 7: This figure shows a schematic architecture of the redundant control system in the event of failures according to a sixth embodiment of the present invention.
- Figure 8: This figure shows a schematic architecture of the redundant control system in the event of failures according to a seventh embodiment of the present invention.
- Figure 9: This figure shows a schematic view of a tanker aircraft according to the present invention.

### DETAILED DESCRIPTION OF THE INVENTION

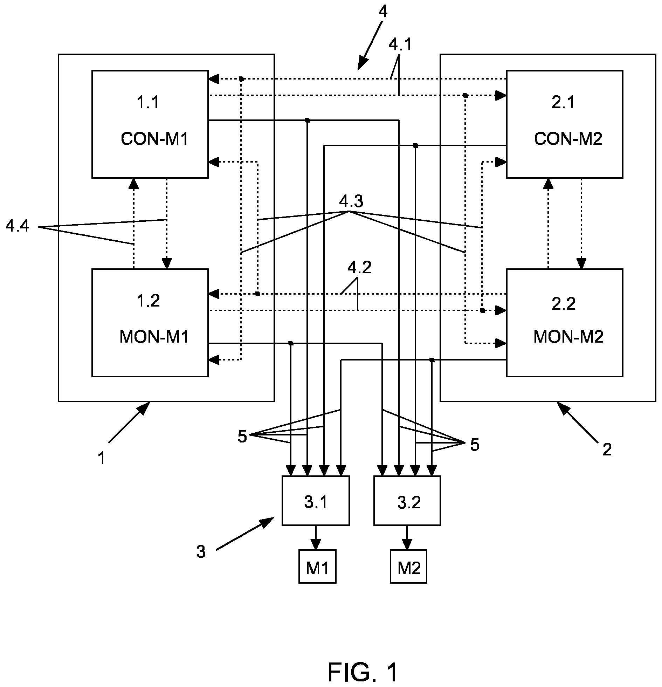

Figure 1 shows the architecture of the redundant control system for a tanker aircraft (6). Particularly, the control system comprises two motors (M1, M2), a first motor (M1) and a second motor (M2). Both motors (M1, M2) being configured to actuate a hose drum unit installed in the tanker aircraft (6) independently of each other, so that the control system must select which motor (M1, M2) would like to operate. The actuation of any of the motors (M1, M2) allows keeping the hose in tension during contact operation in a hose and drogue refuelling system (9).

The control system also comprises two control units (1, 2), a first control unit (1) and a second control unit (2). Each control unit (1, 2) comprises two computing devices (1.1, 1.2, 2.1, 2.2) and is configured to control the actuation of any one of the motors (M1, M2). The control of the actuation of a motor (M1, M2) is understood as the assistance provided by a control unit (1, 2) for the operation of a motor (M1, M2). In addition, for each control unit (1, 2) one computing device is configured as a control computing device (1.1, 2.1) and the other computing device is configured as a monitor computing device (1.2, 2.2). Specifically and also for each control unit (1, 2), the control computing devices (1.1, 2.1) are intended to control the actuation of one motor (M1, M2) and the monitor computing devices (1.2, 2.2) are intended to monitor the moto actuation control performed by the control computing devices (1.1, 2.1).

The redundant control system initially configures each control unit (1, 2) for one motor (M1, M2), for example and as it can be shown in this figure 1, the first control unit (1) for assisting the first motor (M1) and the second control unit (2) for assisting the second motor (M2). According to the first control unit (1), one computing device is configured as a first control computing device (1.1), represented by the expression "CON-M1" and configured for controlling the actuation of the first motor (M1); and the other computing device is configured as a first monitor computing device (1.2), represented by the expression "MON-M1" and being configured for monitoring the motor actuation control performed by the first control computing device (1.1). The same is provided for the second control unit (2) but with regard to the second motor (M2). That is, one computing device is configured as a second control computing device (2.1), represented by the expression "CON-M2" and configured for controlling the actuation of the second motor (M2); and the other computing device is configured as a second monitor computing device (2.2), represented by the expression "MON-M2" and being configured for monitoring the motor actuation control performed by the second control computing device (2.1).

The redundant control system further comprises actuating means (3, 3.1, 3.2) in charge of the actuation of one motor (M1, M2) based on the operation of the computing devices (1.1, 1.2, 2.1, 2.2) and/or on the status of the motors (M1, M2). According to this figure 1, the actuating means is an interlock system comprising a first interlock (3.1) for actuating the first motor (M1) and a second interlock (3.2) for actuating the second motor (M2). In another example (not shown), the interlock system comprises on interlock for independently actuating the motors (M1, M2).

Moreover, the redundant control system comprises a communication network (4, 5) with first communications (4) that connect the computing devices (1.1, 1.2, 2.1, 2.2) to each other and second communications (5) that connect the computing devices (1.1, 1.2, 2.1, 2.2) to the interlock system (3, 3.1, 3.2).

The communication network between computing devices (1.1, 1.2, 2.1, 2.2), that is the first communications (4), is a ring of bidirectional links including communications between control computing devices (1.1, 2.1) "InterCON" (4.1), communications between monitor computing devices (1.2, 2.2) "InterMON" (4.2), communications between a communication and a computing device (1.1, 1.2, 2.1, 2.2) "CrossChannel" (4.3), and communications between computing devices (1.1, 1.2, 2.1, 2.2) of the same control unit (1, 2) "InterFPGA" (4.4).

The redundant control system also comprises monitoring means (not shown in figures) for monitoring the status of the motors (M1, M2) and informing to the interlock system (3, 3.1, 3.2) about the status measured on the motors (M1, M2).

This redundant control system is able to actuate the hose and drum unit installed in the tanker aircraft (7) for keeping the hose in tension during contact operation under both standard and fault conditions, whereby standard condition is understood to be that free of failure in the control system. Therefore, for a contact operation in the hose and drogue refuelling system (9), the redundant control system described above and related to figure 1, is configured to actuate one of the motors (M1, M2) that is going to be controlled by its corresponding control unit (1, 2) depending on how the control system was initially configured. In the event of at least one failure in the redundant control system, this redundant control system detects the failure and is reconfigured accordingly by actuating a fault-free motor (M1, M2) being controlled by a fault-free control unit (1, 2) or a combination of control units (1, 2). The redundant control system may experience one or even two failures, but more than two failures would be very unlikely.

The failure in the redundant control system may be a failure in any computing device (1.1, 1.2, 2.1, 2.2), or a failure in the communication network (4, 5), or a failure in a motor (M1, M2), or a failure in the actuating means or interlock system (3, 3.1, 3.2), or a combination. The failure in the communication network (4, 5) is a failure in the computing device (1.1, 1.2, 2.1, 2.2) from which the failed communications is coming from.

The interlock system, (3. 3.1, 3.2) is further in charge of determining the failures in the control system according to data received from control units (1, 2) regarding the operation of computing devices (1.1, 1.2, 2.1, 2.2) and the status of the motors (M1, M2). Specifically, the determination or detection of failures in the control units (1, 2) is based on the analysis of repetitive code pattern that the interlock system (3, 3.1, 3.2) receives from the computing devices (1.1, 1.2, 2.1, 2.2) through the communications (5) between the computing devices (1.1, 1.2, 2.1, 2.2) and the interlock system (3, 3.1, 3.2).

The interlock system (3, 3.1, 3.2) is configured to detect repetitive code pattern coming from the computing devices (1.1, 1.2, 2.1, 2.2) to validate the status of these computing devices (1.1, 1.2, 2.1, 2.2). If the interlock system (3, 3.1, 3.2) validates repetitive code pattern from each computing device (1.1, 1.2, 2.1, 2.2) of a control unit, the interlock system allows the actuation of the corresponding motor (M1, M2). However, if the interlock system (3, 3.1, 3.2) detects at least one failure in the repetitive code pattern, since the code pattern data coming from the computing devices varies between computing devices (1.1, 1.2, 2.1, 2.2) of the same control unit (1, 2), the interlock system then proceed to cancel the actuation of the motor (M1, M2) that was controlled by the control unit (1, 2) from which the failure originates. As will be seen later, the fact that the actuation of this motor (M1, M2) is cancelled when it is being controlled by the failed control unit (1, 2) does not prevent this motor (M1, M2) from being re-actuated, but it could be re-actuated only when it is controlled by the other control unit (1, 2) that is fault-free or a combination of the two control units (1, 2).

The computing devices (1.1, 1.2, 2.1, 2.2) are further configured to detect any failure in the interlocks (3.1, 3.2) based on the data received from these interlock about its operating status. If the computing devices (1.1, 1.2, 2.1, 2.2) validate the data received from the interlocks (3.1, 3.2) comparing with predefined threshold, the interlocks (3.1, 3.2) continue to operate accordingly. However, if any of the computing devices (1.1, 1.2, 2.1, 2.2) detects at least one failure in the data received from the interlocks (3.1, 3.2), since the data coming from any of the interlocks (3.1, 3.2) is outside the predefined threshold (above or below as established), the redundant control system is reconfigured to either operate the other motor, i.e. the one that was not associated with the interlock (3.1, 3.2) that has failed, operated by the other interlock (3.1, 3.2), i.e. the one that is fault-free, and the control units are also reconfigured accordingly; or to operate the same motor, i.e. that was originally operated by the failed interlock (3.1, 3.2), but now actuated by the interlock free-fault.

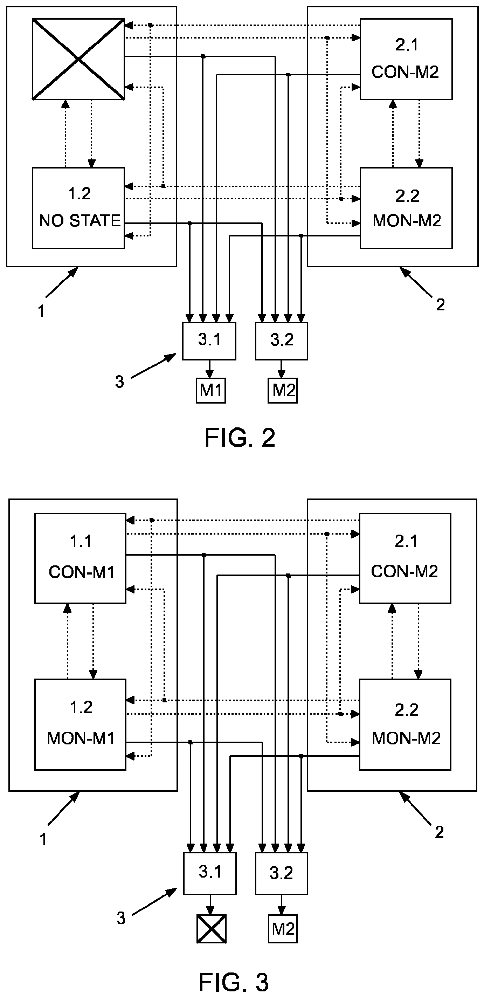

Figures 2-8 shown different embodiments of the redundant control system in the event of one failure or two failures are originated in the redundant control system. The architecture according to the redundant control system shown in these figures 2-8 corresponds to the ones described for figure 1 but showing the failure(s) that occur and how the redundant control system is reconfigured accordingly compared to an initial configuration of the redundant control system.

To explain the embodiments shown in these figures 2-8 and how then redundant control system is reconfigured in case of failure(s), the redundant control system starts from an initial configuration according to the one in figure 1 and in which it has been decided that the first motor (M1) is to be actuated in order to actuate the hose drum unit for keeping the hose in tension during contact operation and is controlled by the first control unit (1). Moreover, although figures 2-8 do not shown the communication network (4, 5), they would present the same configuration as described for figure 1.

Figure 2 shows a first embodiment of the redundant control system when a failure occurs in one computing device. In particular, the first control computing device (1.1) of the first control unit (1) fails. This failure in the first control computing device (1.1) is detected by the first interlock (3.1) and consequently the redundant control system is reconfigured. Since the failure occurs in the first control unit (1), and this first control unit (1) was in charge of controlling the actuation of the first motor (M1), the redundant control system cancels the actuation of the first motor (M1) and gives instruction to actuate the second motor (M2) by the second interlock (3.2), the second motor (M2) being controlled by the second control unit (2). Both second motor (M2) and the second control unit (2) are free of failures, and therefore the second motor (M2) controlled or assisted by the second control unit (2) is available to actuate the hose drum unit for keeping the hose in tension during contact operation.

At the moment of a failure in one computing device (1.1, 1.2, 2.1, 2.2) or in a communication coming from one computing device (1.1, 1.2, 2.1, 2.2), the computing device remaining in the control unit (1, 2) is reconfigured as non-operational (indicated as "NO STATE" in the figures). In the first embodiment shown in figure 2, since the first control computing device (1.1) in the first control unit (1) fails, the remaining computing device in the first control unit (1), the first monitor computing device (1.2) is reconfigured as non-operational.

If in this first embodiment, instead of a failure in the control computing device (1.1), it occurs in the communication (4) coming out of the same control computing device (1.1), the redundant control system understands it as a failure in the control computing device (1.1) and therefore it is reconfigured as explained above.

A similar situation as in the first embodiment would occur if the redundant control system is initially configured to operate the second motor (M2) controlled by the second control unit (2) and a failure occurs in a computing device (2.1, 2.2) of the second control unit (2). In this case the redundant control system cancels the actuation of the second motor (M2) and actuates the first motor (M1) controlled by the first control unit (1).

Figure 3 shows a second embodiment of the redundant control system when a failure occurs in one motor. In particular, the first motor (M1) fails. This failure is detected by the first interlock (3.1) and consequently the redundant control system is reconfigured. Since the failure occurs in the first motor (M1), and this first motor (M1) was controlled by the first control unit (1), the redundant control system gives instruction to actuate the second motor (M2) by the second interlock (3.2), the second motor (M2) being controlled by the second control unit (2). Both second motor (M2) and the second control unit (2) are free of failures, and therefore the second motor (M2) controlled or assisted by the second control unit (2) is available to actuate the hose drum unit for keeping the hose in tension during contact operation.

A similar situation as in the second embodiment would occur if the redundant control system is initially configured to operate the second motor (M2) controlled by the second control unit (2) and a failure occurs in the second motor (M2). In this case the redundant control system actuates the first motor (M1) controlled by the first control unit (1).

In any of the first and second embodiments the redundant control system is reconfigured without the need to reconfigure the function of the computing devices (1.1, 1.2, 2.1, 2.2). Provided that the redundant control system is capable of reconfiguration by operating on the fault-free motor (M1, M2) controlled by the control unit (1, 2) initially configured to support that fault-free motor (M1, M2), the need to reconfigure the computing devices (1.1, 1.2, 2.1, 2.2) will be avoided.

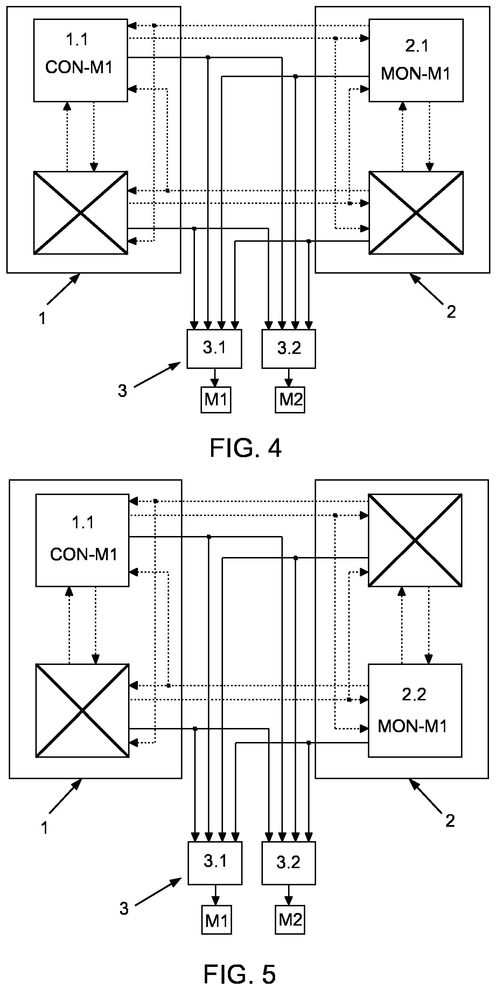

Figure 4 shows a third embodiment of the redundant control system when a failure occurs in two computing devices, each failure from different control units. The first monitor computing device (1.2) of the first control unit (1) and the second monitor computing device (2.2) of the second control unit (2) fail. These failures are detected by the first (3.1) and second (3.2) interlock, respectively, and consequently the redundant control system is reconfigured. Since the failure occurs in both control units (1, 2), the redundant control system maintains the actuation of the first motor (M1) (as initially configured in the system) and combines both control units (1, 2) to assist the actuation of this first motor (M1). Since the computing device that remains alive in the first control unit (1) is the control computing device (1.1), this first control computing device (1.1) is kept in its initial configuration while the computing device that remains alive in the second control unit (2), originally configured as the second control computing device (2.1), is now reconfigured as a monitor computing device to support the first motor (M1) with the control computing device (1.1) of the first control unit (1).

If in this third embodiment, instead of a failure in any of the monitor computing devices (1.2, 2.2), it occurs in the communication (4) coming out of the same monitor computing device (1.2, 2.2), the redundant control system understands it as a failure in the monitor computing device (1.1, 2.1) and therefore it is reconfigured as explained above.

A similar situation as in the third embodiment would occur if the redundant control system is initially configured to operate the second motor (M2) controlled by the second control unit (2) and a failure occurs in the same monitor computing devices (1.2, 2.2) of the first (1) and second (2) control unit respectively. In this case the redundant control system maintains the actuation of the second motor (M2) and combines both control units (1, 2) to assist the actuation of this second motor (M2). Since the computing device that remains alive in the second control unit (2) is the control computing device (2.1), this second control computing device (2.1) is kept in its initial configuration while the computing device that remains alive in the first control unit (1), originally configured as the first control computing device (1.1), is then reconfigured as a monitor computing device to support the second motor (M2) with the control computing device (2.1) of the second control unit (1).

Figure 5 shows a fourth embodiment of the redundant control system when a failure occurs in two computing devices, each failure from different control units. The first monitor computing device (1.2) of the first control unit (1) and the second control computing device (2.1) of the second control unit (2) fail. These failures are detected by the first (3.1) and second (3.2) interlock, respectively, and consequently the redundant control system is reconfigured. Since the failure occurs in both control units (1, 2), the redundant control system maintains the actuation of the first motor (M1) (as initially configured in the system) and combines both control units (1, 2) to assist the actuation of this first motor (M1). Since the computing device that remains alive in the first control unit (1) is the control computing device (1.1), this first control computing device (1.1) is kept in its initial configuration while the computing device that remains alive in the second control unit (2), originally configured as the second monitor computing device (2.2), is now reconfigured as a monitor computing device to support the first motor (M1) with the control computing device (1.1) of the first control unit (1).

If in this fourth embodiment, instead of a failure in any of the first monitor computing device (1.2) or second control computing device (2.1), it occurs in the communication (4) coming out of the same computing device (1.2, 2.2), the redundant control system understands this as a failure in the first monitor computing device (1.1) or in the second control computing device (2.1) and therefore it is reconfigured as explained above.

In any of the third and fourth embodiments, the redundant control system is reconfigured combining the control units (1, 2) to assist the motor (M1, M2) configured to be actuated, with the need to reconfigure the function of at least one of the computing devices (1.1, 1.2, 2.1, 2.2), in particular the one that forms part of the control unit (1, 2) that initially corresponds to the motor (M1, M2) that is not being actuated. Therefore, as soon as there are two faults, each from a different control unit (1, 2), the redundant control system shall at least reconfigure the function of one computing device (1.1, 1.2, 2.1, 2.2) as needed.

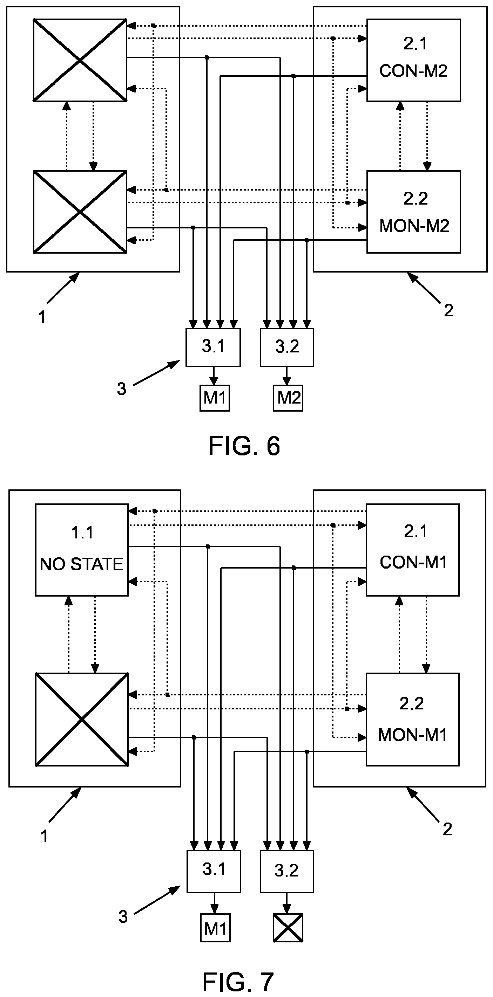

Figure 6 shows a fifth embodiment of the redundant control system when a failure occurs in two computing devices, both failures from the same control unit. The first control computing device (1.1) and the first monitor computing device (1.2), both of the first control unit (1), fail. These failures are detected by the first interlock (3.1) and consequently the redundant control system is reconfigured. Since both failures occurs in the same first control unit (1), the redundant control system cancels the actuation of the first motor (M1) (as initially configured in the system) and proceeds to actuate the second motor (M2) being controlled by the second control unit (2) that is free of failure.

If in this fifth embodiment, instead of a failure in the two computing devices (1.1, 1.2) of the first control unit (1), it occurs in the communication (4) coming out of one of the same computing devices (1.2, 1.2), the redundant control system understands this as a failure in the computing device (1.1, 1.2).

Figure 7 shows a sixth embodiment of the redundant control system when a failure occurs in one computing device and in one motor. The first monitor computing device (1.2) of the first control unit (1) and the second motor (M2) fail. These failures are detected by the first (3.1) and second (3.2) interlock, respectively, and consequently the redundant control system is reconfigured. Since the failure of the computing device occurs in the first control unit (1) and the second motor (M2), the redundant control system maintains the actuation of the first motor (M1) (as initially configured in the system and is now fault-free) and reconfigures the second control unit (2) to be able to support the first motor (M1). Specifically, the second control computing device (2.1) of the second control unit (2) is reconfigured as a control computing device for controlling the actuation of the first motor (M1) and the second monitor computing device (2.2) of the same second control unit (2) is reconfigured as a monitor computing device for monitoring the motor actuation control performed by the second control computing device (2.1). In addition, since the first monitor computing device (1.2) of the first control unit (1) fails, the remaining computing device in this first control unit (1), the first control computing device (1.1) is reconfigured as non-operational.

Therefore, in the event of a fault in any computing device (1.1, 1.2, 2.1, 2.2) or any communication coming from a computing device (1.1, 1.2, 2.1, 2.2) and a fault in any of the motors (M1, M2), the redundant control system is reconfigured to operate the fault-free motor being controlled by the fault-free control unit or a combination of control units.

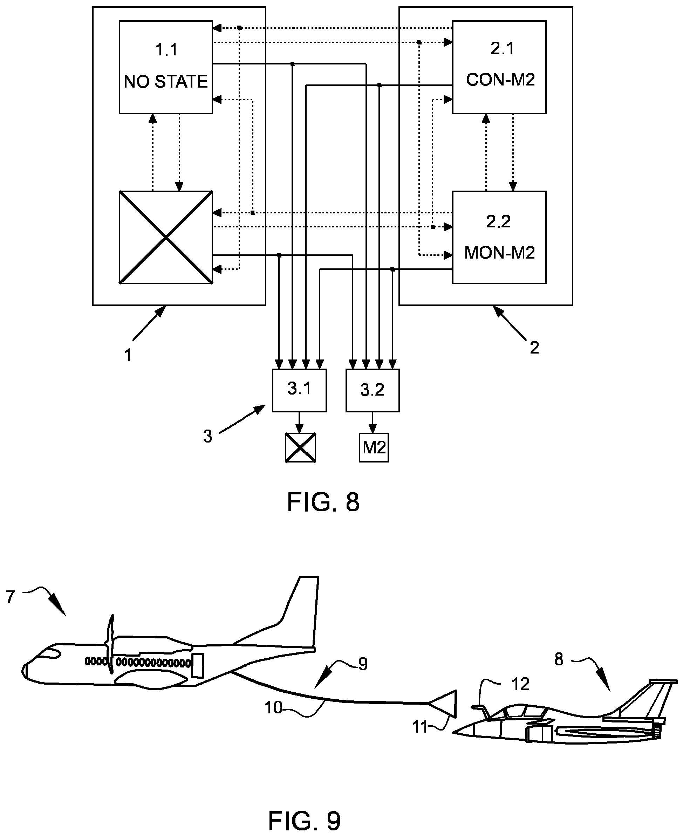

Figure 8 shows a seventh embodiment of the redundant control system when a failure occurs in one computing device and in one motor. The first monitor computing device (1.2) of the first control unit (1) and the first motor (M1) fail. These failures are detected by the first interlock (3.1), and consequently the redundant control system is reconfigured. Since the failure of the computing device occurs in the first control unit (1) and in the first motor (M1), the redundant control system cancels the actuation of the first motor (M1) and actuates the second motor (M2) being controlled by the second control unit (2). Both second motor (M2) and the second control unit (2) being fault-free.

According to any of sixth and seventh embodiments, in the event of a fault in any computing device (1.1, 1.2, 2.1, 2.2) or any communication coming from a computing device (1.1, 1.2, 2.1, 2.2) and a fault in any of the motors (M1, M2), the redundant control system is reconfigured to operate the fault-free motor being controlled by the fault-free control unit or a combination of control units. Although no such example is shown where two control units are combined, this could also be possible. For example, by combining the remaining alive computing device in one of the control units with one of the computing devices of the other control unit, reconfiguring their functions as necessary according to the motor to be operated.

The present invention also provides a method for keeping hose in tension during contact operation. Specifically, below is describes different examples of method for keeping hose in tension during contact operation in a hose and drogue refuelling system (9) by the redundant control system described above.

This method comprises the following steps:
(a) actuating one motor (M1, M2) to actuate a hose drum unit for keeping the hose in tension during contact operation, the actuated motor (M1, M2) being controlled by one control unit (1, 2), and
(b) in the event of at least one failure in the redundant control system, reconfiguring the redundant control system to actuate a fault-free motor (M1, M2) being controlled by a fault-free control unit (1, 2) or a combination of control units (1, 2).

Before step (a), the method comprises the step of configuring (as initial configuration) the redundant control system, this step of initially configuring comprises: (i) corresponding, for example, the first control unit (1) with the first motor (M1) and the second control unit (2) with the second motor (M2); and (ii) choosing which motor is to be driven, e.g. the first motor (M1).

Once the redundant control system has been initially configured, and according to step (a), the first motor (1) is actuated being controlled by the first control unit (1). If failure(s) occur(s) after the redundant control system has been started or at start-up, the method performs step (b). Different examples in case of failure(s) are described below regarding this step (b).

If a failure occurs in any of the computing devices (1.1, 1.2, 2.1, 2.2) or in any motors (M1, M2), as for example shown in figures 2 and 3, the step (b) comprises reconfiguring the redundant control system to cancel the actuation of first motor (M1), and then to actuate the second motor (M2) that is fault-free and to support this second motor (M2) by the second control unit (2) also fault-free.

If a failure occurs in two computing devices (1.1, 1.2, 2.1, 2.2), each failure from different control units (1, 2), as for example shown in figures 4 and 5, the step (b) comprises reconfiguring the redundant control system to maintain the first motor (M1) actuated and combining control units (1, 2) by reconfiguring any of the computing devices which remain alive in the control unit (1, 2) as necessary. According to the example of figure 4, the second control computing device (2.1) of the second control unit (2) is reconfigured as a monitor computing device to support the first motor (M1) with the first control computing device (1.1). On the other hand, according to the example of figure 5, the second monitor computing device (2.2) of the second control unit (2) is reconfigured as a monitor computing device to support the first motor (M1) with the first control computing device (1.1) of the first control unit (1).

If a failure occurs in two computing devices (1.1, 1.2, 2.1, 2.2), both failures from the same control unit (1, 2), as for example shown in figure 7, the step (b) comprises reconfiguring the redundant control system to cancel the actuation of first motor (M1), and then to actuate the second motor (M2) being controlled by the second control unit (2).

Two computing device failures in the control units shall be understood as computing device failures per se, communication failures from computing devices or a combination of both.

If a failure occurs in one computing device (1.1, 1.2, 2.1, 2.2) and in one motor (M1, M2), as for example shown in figures 7 and 8, the step (b) comprises reconfiguring the redundant control system to actuate the fault-free motor (M1, M2) being controlled by the fault-free control unit (1, 2) or a combination of both control units (1, 2), as necessary. According to the example of figure 7, the actuation of the first motor (M1) is maintained and the second control computing device (2.1) and the second monitor computing device (2.2), both from the second control unit (2), are respectively reconfigured as a control computing device and monitor computing device to support the first motor (M1). According to the example of figure 8, the redundant control system cancels the actuation of the first motor (M1) and actuates the second motor (M2) being controlled by the second control unit (2).

Figure 9 shows a tanker aircraft (7) comprising a hose (10) and drogue (11) refuelling system (9) and a redundant control system (not shown) as the one described in the above examples. Moreover, this figure 9 shows a receiver aircraft (8) intended to be refuelled by tanker aircraft (7) through its probe (12).

## Claims

1. Redundant control system for keeping hose in tension during contact operation in a hose and drogue refuelling system (9), the redundant control system comprising:
- two motors (M1, M2) configured independently to actuate a hose drum unit for keeping the hose in tension during contact operation when one of them is actuated;
- two control units (1, 2), each control unit (1, 2) comprising two computing devices (1.1, 1.2, 2.1, 2.2) and being configured to control the actuation of any one of the motors (M1, M2);
- actuating means (3, 3.1, 3.2) configured to actuate one motor (M1, M2) based at least on the operation of the computing devices (1.1, 1.2, 2.1, 2.2) and/or on the status of the motors (M1, M2);
- a communication network (4, 5) connecting the computing devices (1.1, 1.2, 2.1, 2.2) to each other and the computing devices (1.1, 1.2, 2.1, 2.2) to the actuating means (3, 3.1, 3.2);
wherein
for each control unit (1, 2) one computing device is configured as a control computing device (1.1, 2.1) for controlling the actuation of one motor (M1, M2), and the other computing device is configured as a monitor computing device (1.2, 2.2) for monitoring the motor actuation control performed by the control computing device (1.1, 2.1); and
for a contact operation in the hose and drogue refuelling system (9), the redundant control system is configured to actuate one motor (M1, M2) being controlled by one control unit (1, 2); and in the event of at least one failure in the redundant control system, the redundant control system is reconfigured to actuate a fault-free motor (M1, M2) being controlled by a fault-free control unit (1, 2) or a combination of control units (1, 2).

2. The redundant control system according to the previous claim, wherein
the at least one failure in the redundant control system is a computing device (1.1, 1.2, 2.1, 2.2) failure, or a communication failure in the communication network (4, 5), or a motor (M1, M2) failure, or actuating means (3, 3.1, 3.2) failure; and
wherein a communication failure in the communication network (4, 5) corresponds to a failure in the computing device (1.1, 1.2, 2.1, 2.2) from which the failed communication is coming from.

3. The redundant control system according to any one of previous claims, wherein:
the at least one failure, in a computing device (1.1, 1.2, 2.1, 2.2), communication network (4, 5) or motor (M1, M2), is determined by the actuating means (3, 3.1, 3.2) based on the data received from the control units (1, 2) regarding the operation of the computing devices (1.1, 1.2, 2.1, 2.2) and on the status of the motors (M1, M2); and/or
the at least one failure in actuating means (3, 3.1, 3.2) is determined by the control units (1, 2) based on data received from the actuating means (3, 3.1, 3.2) regarding the operation of a motor (M1, M2).

4. The redundant control system according to any one of previous claims, wherein the actuating means (3, 3.1, 3.2) is an interlock system configured to detect a repetitive code pattern coming from the computing devices (1.1, 1.2, 2.1, 2.2) through the communication network (5) to validate the status of the computing devices (1.1, 1.2, 2.1, 2.2) for each control unit (1, 2), so that
∘ if the interlock system validates repetitive code patterns from each computing device (1.1, 1.2, 2.1, 2.2) of a control unit (1,2), the interlock system allows the actuation of the corresponding motor (M1, M2); or
∘ if the interlock system detects at least one failure in the repetitive code pattern, the interlock system cancels the actuation of the motor (M1, M2) controlled by the control unit (1, 2) from which the failure originates.

5. The redundant control system according to any one of previous claims, wherein the status of the motors (M1, M2) is provided to the actuating means (3, 3.1, 3.2) by monitoring means configured to monitor the motors (M1, M2).

6. The redundant control system according to any one of previous claims, wherein in the event of at least one failure in the redundant control system, the redundant control system is configured to reconfigure the computing devices (1.1, 1.2, 2.1, 2.2) as control computing devices or monitor computing devices depending on the motor (M1, M2) to be actuated; the control of the motor (M1, M2) to be actuated being carried out by a fault-free control unit (1, 2) or a combination of control units (1, 2) with fault-free computing devices (1.1, 1.2, 2.1, 2.2).

7. The redundant control system according to the previous claim, wherein in the event of a failure of two computing devices (1.1, 1.2, 2.1, 2.2) or two communications in the communication network (4, 5) or a combination of both, each failure from a different control unit (1, 2), the redundant control system is reconfigured to actuate any one of the motors (M1, M2) being controlled by a combination of both control units (1, 2).

8. The redundant control system according to claim 6, wherein in the event of a failure of two computing devices (1.1, 1.2, 2.1, 2.2) or two communications of the communication network (4, 5) or a combination of both, both failures from the same control unit (1, 2), the redundant control system is reconfigured to actuate any one of the motors (M1, M2) which being controlled by fault-free the control unit (1, 2).

9. The redundant control system according to claim 6, wherein in the event of a failure of one computing device (1.1, 1.2, 2.1, 2.2) or a communication of the communication network (4, 5) and a failure of one motor (M1, 2), the redundant control system is reconfigured to actuate the fault-free motor (M1, M2) controlled by the fault-free control unit (1, 2) or a combination of both control units (1, 2).

10. The redundant control system according to any one of previous claims, wherein the communication network (4) between the computing devices (1.1, 1.2, 2.1, 2.2) is a ring of bidirectional links.

11. Tanker aircraft (7) comprising a redundant control system according to any one of the previous claims.

12. Method for keeping hose in tension during contact operation in a hose and drogue refuelling system (9) by the redundant control system according to any one of the claims 1-10, the method comprising:
(a) actuating one motor (M1, M2) to actuate a hose drum unit for keeping the hose in tension during contact operation, the actuated motor (M1, M2) being controlled by one control unit (1, 2), and
(b) in the event of at least one failure in the redundant control system, reconfiguring the redundant control system to actuate a fault-free motor (M1, M2) being controlled by a fault-free control unit (1, 2) or a combination of control units (1, 2).

13. Method according to the previous claim, wherein in the event of a failure of two computing devices (1.1, 1.2, 2.1, 2.2) or two communications in the communication network (4, 5) or a combination of both, each from a different control unit (1, 2), step (b) comprises reconfiguring the redundant control system to actuate any one of the motors (M1, M2) being controlled by a combination of both control units (1, 2).

14. Method according to claim 12, wherein in the event of a failure of two computing devices (1.1, 1.2, 2.1, 2.2) or two communications in the communication network (4, 5) or a combination of both, each from the same control unit (1, 2), step (b) comprises reconfiguring the redundant control system to actuate any one of the motors (M1, M2) being controlled by the fault-free control unit (1, 2).

15. Method according to claim 12, wherein in the event of a failure of one computing device (1.1, 1.2, 2.1, 2.2) or a communication in the communication network (4, 5) and a failure of one motor (M1, 2), step (b) comprises reconfiguring the redundant control system to actuate a fault-free motor (M1, M2) being controlled by a fault-free control unit (1, 2) or a combination of both control units (1, 2).

## Patentansprüche

1. Redundantes Steuerungssystem, um während des Kontaktbetriebs in einem Schlauch-und-Fangtrichter-Betankungssystem (9) den Schlauch unter Spannung zu halten, wobei das redundante Steuerungssystem Folgendes umfasst:
- zwei Motoren (M1, M2), die unabhängig dazu konfiguriert sind, eine Schlauchtrommeleinheit zu betätigen, um den Schlauch während des Kontaktbetriebs unter Spannung zu halten, wenn einer von ihnen betätigt wird;
- zwei Steuerungseinheiten (1, 2), wobei jede Steuerungseinheit (1, 2) zwei Rechenvorrichtungen (1.1, 1.2, 2.1, 2.2) umfasst und dazu konfiguriert ist, die Betätigung eines beliebigen der Motoren (M1, M2) zu steuern;
- Betätigungsmittel (3, 3.1, 3.2), die dazu konfiguriert sind, einen Motor (M1, M2) zumindest basierend auf dem Betrieb der Rechenvorrichtungen (1.1, 1.2, 2.1, 2.2) und/oder auf dem Status der Motoren (M1, M2) zu betätigen;
- ein Kommunikationsnetzwerk (4, 5), das die Rechenvorrichtungen (1.1, 1.2, 2.1, 2.2) miteinander und die Rechenvorrichtungen (1.1, 1.2, 2.1, 2.2) mit den Betätigungsmitteln (3, 3.1, 3.2) verbindet;
wobei
für jede Steuerungseinheit (1, 2) eine Rechenvorrichtung als eine Steuerungsrechenvorrichtung (1.1, 2.1) zum Steuern der Betätigung eines Motors (M1, M2) konfiguriert ist, und die andere Rechenvorrichtung als eine Überwachungsrechenvorrichtung (1.2, 2.2) zum Überwachen der Motorbetätigungssteuerung, die durch die Steuerungsrechenvorrichtung (1.1, 2.1) durchgeführt wird, konfiguriert ist; und
für einen Kontaktbetrieb in dem Schlauch-und-Fangtrichter-Betankungssystem (9) das redundante Steuerungssystem dazu konfiguriert ist, einen Motor (M1, M2) zu betätigen, der von einer Steuerungseinheit (1, 2) gesteuert wird; und im Falle mindestens eines Ausfalls in dem redundanten Steuerungssystem das redundante Steuerungssystem neu konfiguriert wird, um einen fehlerfreien Motor (M1, M2) zu betätigen, der durch eine fehlerfreie Steuerungseinheit (1, 2) oder eine Kombination von Steuerungseinheiten (1, 2) gesteuert wird.

2. Redundantes Steuerungssystem nach dem vorhergehenden Anspruch, wobei
der mindestens eine Ausfall in dem redundanten Steuerungssystem ein Ausfall einer Rechenvorrichtung (1.1, 1.2, 2.1, 2.2) oder ein Kommunikationsausfall in dem Kommunikationsnetzwerk (4, 5) oder ein Ausfall eines Motors (M1, M2) oder ein Ausfall der Betätigungsmittel (3, 3.1, 3.2) ist; und
wobei ein Kommunikationsausfall in dem Kommunikationsnetzwerk (4, 5) einem Ausfall in der Rechenvorrichtung (1.1, 1.2, 2.1, 2.2) entspricht, von der die ausgefallene Kommunikation kommt.

3. Redundantes Steuerungssystem nach einem der vorhergehenden Ansprüche, wobei:
der mindestens eine Ausfall, in einer Rechenvorrichtung (1.1, 1.2, 2.1, 2.2), einem Kommunikationsnetzwerk (4, 5) oder einem Motor (M1, M2) durch die Betätigungsmittel (3, 3.1, 3.2) basierend auf den Daten, die von den Steuerungseinheiten (1, 2) bezüglich des Betriebs der Rechenvorrichtungen (1.1, 1.2, 2.1, 2.2) empfangen werden, und auf dem Status der Motoren (M1, M2) bestimmt wird; und/oder
der mindestens eine Ausfall der Betätigungsmittel (3, 3.1, 3.2) von den Steuerungseinheiten (1, 2) basierend auf den Daten , die von den Betätigungsmitteln (3, 3.1, 3.2) bezüglich des Betriebs eines Motors (M1, M2) empfangen werden, bestimmt wird.

4. Redundantes Steuerungssystem nach einem der vorhergehenden Ansprüche, wobei die Betätigungsmittel (3, 3,1, 3,2) ein Verriegelungssystem sind, das dazu konfiguriert ist, ein sich wiederholendes Codemuster zu erkennen, das von den Rechenvorrichtungen (1.1, 1.2, 2.1, 2.2) über das Kommunikationsnetzwerk (5) kommt, um den Status der Rechenvorrichtungen (1.1, 1.2, 2.1, 2.2) für jede Steuerungseinheit (1, 2) zu validieren, so dass,
∘ wenn das Verriegelungssystem sich wiederholende Codemuster von jeder Rechenvorrichtung (1.1, 1.2, 2.1, 2.2) einer Steuerungseinheit (1,2) validiert, das Verriegelungssystem die Betätigung des entsprechenden Motors (M1, M2) ermöglicht; oder
∘ wenn das Verriegelungssystem mindestens einen Ausfall des sich wiederholenden Codemusters erkennt, das Verriegelungssystem die Betätigung des Motors (M1, M2) abbricht, der von der Steuerungseinheit (1, 2) gesteuert wird, von der der Ausfall ausgeht.

5. Redundantes Steuerungssystem nach einem der vorhergehenden Ansprüche, wobei der Status der Motoren (M1, M2) den Betätigungsmitteln (3, 3.1, 3.2) durch Überwachungsmittel bereitgestellt wird, die zum Überwachen der Motoren (M1, M2) konfiguriert sind.

6. Redundantes Steuerungssystem nach einem der vorhergehenden Ansprüche, wobei im Falle mindestens eines Ausfalls in dem redundanten Steuerungssystem das redundante Steuerungssystem dazu konfiguriert ist, die Rechenvorrichtungen (1.1, 1.2, 2.1, 2.2) in Abhängigkeit von dem zu betätigenden Motor (M1, M2) als Steuerungsrechenvorrichtungen oder Überwachungsrechenvorrichtungen neu zu konfigurieren; wobei die Steuerung des zu betätigenden Motors (M1, M2) durch eine fehlerfreie Steuerungseinheit (1, 2) oder eine Kombination von Steuerungseinheiten (1, 2) mit fehlerfreien Rechenvorrichtungen (1.1, 1.2, 2.1, 2.2) ausgeführt wird.

7. Redundantes Steuerungssystem nach dem vorhergehenden Anspruch, wobei im Falle eines Ausfalls von zwei Rechenvorrichtungen (1.1, 1.2, 2.1, 2.2) oder zwei Kommunikationen in dem Kommunikationsnetzwerk (4, 5) oder einer Kombination von beiden, wobei jeder Ausfall von einer anderen Steuerungseinheit (1, 2) ausgeht, das redundante Steuerungssystem neu konfiguriert wird, einen beliebigen der Motoren (M1, M2) gesteuert durch eine Kombination beider Steuerungseinheiten (1, 2) zu betätigen.

8. Redundantes Steuerungssystem nach Anspruch 6, wobei im Falle eines Ausfalls von zwei Rechenvorrichtungen (1.1, 1.2, 2.1, 2.2) oder zwei Kommunikationen des Kommunikationsnetzwerks (4, 5) oder einer Kombination von beiden, wobei beide Ausfälle von derselben Steuerungseinheit (1, 2) ausgehen, das redundante Steuerungssystem neu konfiguriert wird, einen beliebigen der Motoren (M1, M2), der durch die fehlerfreie Steuerungseinheit (1, 2) gesteuert wird, zu betätigen.

9. Redundantes Steuerungssystem nach Anspruch 6, wobei im Falle eines Ausfalls einer Rechenvorrichtung (1.1, 1.2, 2.1, 2.2) oder einer Kommunikation des Kommunikationsnetzwerks (4, 5) und eines Ausfalls eines Motors (M1, 2) das redundante Steuerungssystem neu konfiguriert wird, den fehlerfreien Motor (M1, M2) gesteuert von der fehlerfreien Steuerungseinheit (1, 2) oder einer Kombination beider Steuerungseinheiten (1, 2) zu betätigen.

10. Redundantes Steuerungssystem nach einem der vorhergehenden Ansprüche, wobei das Kommunikationsnetzwerk (4) zwischen den Rechenvorrichtungen (1.1, 1.2, 2.1, 2.2) ein Ring von bidirektionalen Verbindungen ist.

11. Tankluftfahrzeug (7), das ein redundantes Steuerungssystem nach einem der vorhergehenden Ansprüche umfasst.

12. Verfahren, um einen Schlauch während eines Kontaktbetriebs in einem Schlauch-und-Fangtrichter-Betankungssystem (9) durch das redundante Steuerungssystem nach einem der Ansprüche 1-10 unter Spannung zu halten, wobei das Verfahren Folgendes umfasst:
(a) Betätigen eines Motors (M1, M2), um eine Schlauchtrommeleinheit zu betätigen, um den Schlauch während des Kontaktbetriebs unter Spannung zu halten, wobei der betätigte Motor (M1, M2) von einer Steuerungseinheit (1, 2) gesteuert wird, und
(b) im Falle von mindestens einem Ausfall des redundanten Steuerungssystems Neukonfigurieren des redundanten Steuerungssystems, einen fehlerfreien Motor (M1, M2), der von einer fehlerfreien Steuerungseinheit (1, 2) oder einer Kombination von Steuerungseinheiten (1, 2) gesteuert wird, zu betätigen.

13. Verfahren nach dem vorhergehenden Anspruch, wobei im Falle eines Ausfalls von zwei Rechenvorrichtungen (1.1, 1.2, 2.1, 2.2) oder zwei Kommunikationen in dem Kommunikationsnetzwerk (4, 5) oder einer Kombination von beiden, der jeweils von einer anderen Steuerungseinheit (1, 2) ausgeht, Schritt (b) das Neukonfigurieren des redundanten Steuerungssystems umfasst, einen beliebigen der Motoren (M1, M2), der durch eine Kombination beider Steuerungseinheiten (1, 2) gesteuert wird, zu betätigen.

14. Verfahren nach Anspruch 12, wobei im Falle eines Ausfalls von zwei Rechenvorrichtungen (1.1, 1.2, 2.1, 2.2) oder zwei Kommunikationen in dem Kommunikationsnetzwerk (4, 5) oder einer Kombination von beiden, der jeweils von derselben Steuerungseinheit (1, 2) ausgeht, Schritt (b) das Neukonfigurieren des redundanten Steuerungssystems umfasst, einen beliebigen der Motoren (M1, M2), der durch die fehlerfreie Steuerungseinheit (1, 2) gesteuert wird, zu betätigen.

15. Verfahren nach Anspruch 12, wobei im Falle eines Ausfalls einer Rechenvorrichtung (1.1, 1.2, 2.1, 2.2) oder einer Kommunikation in dem Kommunikationsnetzwerk (4, 5) und eines Ausfalls eines Motors (M1, 2) Schritt (b) das Neukonfigurieren des redundanten Steuerungssystems umfasst, einen fehlerfreien Motor (M1, M2), der durch eine fehlerfreie Steuerungseinheit (1, 2) oder eine Kombination beider Steuerungseinheiten (1, 2) gesteuert wird, zu betätigen.

## Revendications

1. Système de commande redondant pour maintenir un tuyau en tension durant une opération de contact dans un système de ravitaillement avec tuyau et cône (9), le système de commande redondant comprenant :
- deux moteurs (M1, M2) configurés indépendamment pour actionner une unité tambour de tuyau pour maintenir le tuyau en tension durant l'opération de contact lorsque l'un d'eux est actionné ;
- deux unités de commande (1, 2), chaque unité de commande (1, 2) comprenant deux dispositifs informatiques (1.1, 1.2, 2.1, 2.2) et étant configurée pour commander l'actionnement de l'un quelconque des moteurs (M1, M2) ;
- des moyens actionneurs (3, 3.1, 3.2) configurés pour actionner un moteur (M1, M2) sur la base au moins en partie de l'opération des dispositifs informatiques (1.1, 1.2, 2.1, 2.2) et/ou sur de l'état des moteurs (M1, M2) ;
- un réseau de communication (4, 5) connectant les dispositifs informatiques (1.1, 1.2, 2.1, 2.2) l'un à l'autre et les dispositifs informatiques (1.1, 1.2, 2.1, 2.2) aux moyens actionneurs (3, 3.1, 3.2) ;
dans lequel
pour chaque unité de commande (1, 2), un dispositif informatique est configuré sous forme de dispositif informatique de commande (1.1, 2.1) destiné à commander l'actionnement d'un moteur (M1, M2), et l'autre dispositif informatique est configuré sous forme de dispositif informatique de surveillance (1.2, 2.2) destiné à surveiller la commande d'actionnement de moteur réalisée par le dispositif informatique de commande (1.1, 2.1) ; et
pour une opération de contact dans le système de ravitaillement avec tuyau et cône (9), le système de commande redondant est configuré pour actionner un moteur (M1, M2) commandé par une unité de commande (1, 2) ; et, dans le cas d'au moins une défaillance dans le système de commande redondant, le système de commande redondant est reconfiguré pour actionner un moteur fiable (M1, M2) commandé par une unité de commande fiable (1, 2) ou une combinaison d'unités de commande (1, 2).

2. Système de commande redondant selon la revendication précédente, dans lequel
l'au moins une défaillance dans le système de commande redondant est une défaillance des dispositifs informatiques (1.1, 1.2, 2.1, 2.2), ou une défaillance de communication dans le réseau de communication (4, 5), ou une défaillance du moteur (M1, M2), ou une défaillance des moyens actionneurs (3, 3.1, 3.2) ; et
dans lequel une défaillance de communication dans le réseau de communication (4, 5) correspond à une défaillance dans le dispositif informatique (1.1, 1.2, 2.1, 2.2) dont provient la communication défaillante.

3. Système de commande redondant selon l'une quelconque des revendications précédentes, dans lequel :
l'au moins une défaillance, dans un dispositif informatique (1.1, 1.2, 2.1, 2.2), un réseau de communication (4, 5), ou un moteur (M1, M2), est déterminée par les moyens actionneurs (3, 3.1, 3.2) sur la base des données reçues en provenance des unités de commande (1, 2) concernant l'opération des dispositifs informatiques (1.1, 1.2, 2.1, 2.2) et de l'état des moteurs (M1, M2) ; et/ou
l'au moins une défaillance dans les moyens actionneurs (3, 3.1, 3.2) est déterminée par les unités de commande (1, 2) sur la base de données reçues en provenance des moyens actionneurs (3, 3.1, 3.2) concernant l'opération d'un moteur (M1, M2).

4. Système de commande redondant selon l'une quelconque des revendications précédentes, dans lequel les moyens actionneurs (3, 3.1, 3.2) sont un système d'enclenchement solidaire configuré pour détecter un schéma de code répétitif provenant des dispositifs informatiques (1.1, 1.2, 2.1, 2.2) par le biais du réseau de communication (5) pour valider l'état des dispositifs informatiques (1.1, 1.2, 2.1, 2.2) pour chaque unité de commande (1, 2), de telle sorte que
∘ si le système d'enclenchement solidaire valide des schémas de code répétitifs provenant de chaque dispositif informatique (1.1, 1.2, 2.1, 2.2) d'une unité de commande (1,2), le système d'enclenchement solidaire permet l'actionnement du moteur correspondant (M1, M2) ; ou
∘ si le système d'enclenchement solidaire détecte au moins une défaillance dans le schéma de code répétitif, le système d'enclenchement solidaire annule l'actionnement du moteur (M1, M2) commandé par l'unité de commande (1, 2) dont provient la défaillance.

5. Système de commande redondant selon l'une quelconque des revendications précédentes, dans lequel l'état des moteurs (M1, M2) est fourni aux moyens actionneurs (3, 3.1, 3.2) par des moyens de surveillance configurés pour surveiller les moteurs (M1, M2).

6. Système de commande redondant selon l'une quelconque des revendications précédentes, dans lequel, dans le cas d'au moins une défaillance dans le système de commande redondant, le système de commande redondant est configuré pour reconfigurer les dispositifs informatiques (1.1, 1.2, 2.1, 2.2) en tant que dispositifs informatiques de commande ou dispositifs informatiques de surveillance en fonction du moteur (M1, M2) devant être actionné ; la commande du moteur (M1, M2) devant être actionné étant effectuée par une unité de commande fiable (1, 2) ou une combinaison d'unités de commande (1, 2) avec des dispositifs informatiques fiables (1.1, 1.2, 2.1, 2.2).

7. Système de commande redondant selon la revendication précédente, dans lequel, dans le cas d'une défaillance de deux dispositifs informatiques (1.1, 1.2, 2.1, 2.2) ou de deux communications dans le réseau de communication (4, 5) ou d'une combinaison des deux, chaque défaillance provenant d'une unité de commande différente (1, 2), le système de commande redondant est reconfiguré pour actionner l'un quelconque des moteurs (M1, M2) commandé par une combinaison des deux unités de commande (1, 2).

8. Système de commande redondant selon la revendication 6, dans lequel, dans le cas d'une défaillance de deux dispositifs informatiques (1.1, 1.2, 2.1, 2.2) ou de deux communications du réseau de communication (4, 5) ou une combinaison des deux, les deux défaillances provenant de la même unité de commande (1, 2), le système de commande redondant est reconfiguré pour actionner l'un quelconque des moteurs (M1, M2) commandé par l'unité de commande fiable (1, 2).

9. Système de commande redondant selon la revendication 6, dans lequel, dans le cas d'une défaillance d'un dispositif informatique (1.1, 1.2, 2.1, 2.2) ou d'une communication du réseau de communication (4, 5) et d'une défaillance d'un moteur (M1, 2), le système de commande redondant est reconfiguré pour actionner le moteur fiable (M1, M2) commandé par l'unité de commande fiable (1, 2) ou une combinaison des deux unités de commande (1, 2).

10. Système de commande redondant selon l'une quelconque des revendications précédentes, dans lequel le réseau de communication (4) entre les dispositifs informatiques (1.1, 1.2, 2.1, 2.2) est un anneau de liaisons bidirectionnelles.

11. Avion-citerne (7), comprenant un système de commande redondant selon l'une quelconque des revendication précédentes.

12. Procédé pour maintenir un tuyau en tension durant une opération de contact dans un système de ravitaillement avec tuyau et cône (9) par le système de commande redondant selon l'une quelconque des revendications 1 à 10, le procédé comprenant :
(a) l'actionnement d'un moteur (M1, M2) pour actionner une unité tambour de tuyau pour maintenir le tuyau en tension durant l'opération de contact, le moteur actionné (M1, M2) étant commandé par une unité de commande (1, 2), et
(b) dans le cas d'au moins une défaillance dans le système de commande redondant, la reconfiguration du système de commande redondant pour actionner un moteur fiable (M1, M2) commandé par une unité de commande fiable (1, 2) ou une combinaison d'unités de commande (1, 2).

13. Procédé selon la revendication précédente, dans lequel, dans le cas d'une défaillance de deux dispositifs informatiques (1.1, 1.2, 2.1, 2.2) ou de deux communications dans le réseau de communication (4, 5) ou d'une combinaison des deux, chacune provenant d'une unité de commande différente (1, 2), l'étape (b) comprend la reconfiguration du système de commande redondant pour actionner l'un quelconque des moteurs (M1, M2) commandé par une combinaison des deux unités de commande (1, 2).

14. Procédé selon la revendication 12, dans lequel, dans le cas d'une défaillance de deux dispositifs informatiques (1.1, 1.2, 2.1, 2.2) ou de deux communications dans le réseau de communication (4, 5) ou d'une combinaison des deux, chacune provenant de la même unité de commande (1, 2), l'étape (b) comprend la reconfiguration du système de commande redondant pour actionner l'un quelconque des moteurs (M1, M2) commandé par l'unité de commande fiable (1, 2) .

15. Procédé selon la revendication 12, dans lequel, dans le cas d'une défaillance d'un dispositif informatique (1.1, 1.2, 2.1, 2.2) ou d'une communication dans le réseau de communication (4, 5) et d'une défaillance d'un moteur (M1, 2), l'étape (b) comprend la reconfiguration du système de commande redondant pour actionner un moteur fiable (M1, M2) commandé par une unité de commande fiable (1, 2) ou une combinaison des deux unités de commande (1, 2).
